# EUROPÄISCHE PATENTANMELDUNG

(11) **EP 3 282 543 A1**
(43) Veröffentlichungstag der Anmeldung: **14.02.2018**
(21) Anmeldenummer: 17186085.1
(22) Anmeldetag: 14.08.2017
(51) Int. Cl.: H02J 7/00

(54) **ELEKTRISCHES ENERGIESPEICHERVORRICHTUNGSSYSTEM UND VERFAHREN ZUM MINDESTENS TEILWEISEN AKTIVEN ENTLADEN MINDESTENS EINES ENERGIESPEICHERS EINER ELEKTRISCHEN ENERGIESPEICHERVORRICHTUNG**

(30) Priorität: 12.08.2016 DE 102016115052
(71) Anmelder: Alfred Kärcher GmbH & Co. KG, 71364 Winnenden (DE)
(72) Erfinder: Beck, Bernhard, 70563 Stuttgart (DE); Schmid, Jörg, 71397 Leutenbach (DE)
(74) Vertreter: Hoeger, Stellrecht & Partner Patentanwälte mbB

(57) **Zusammenfassung**

Um ein elektrisches Energiespeichervorrichtungssystem (100) umfassend eine elektrische Energiespeichervorrichtung (12) für ein Elektrogerät (10), welche elektrische Energiespeichervorrichtung (12) mindestens einen elektrischen Energiespeicher (36) und eine Steuereinrichtung (40) zum Steuern und Überwachen eines Ladezustands des mindestens einen elektrischen Energiespeichers (36) umfasst, welche Steuereinrichtung (40) ausgebildet ist zum Aktivieren einer Entladeeinrichtung (42) zum Entladen des mindestens einen Energiespeichers (36) durch Abgabe von im mindestens einen elektrischen Energiespeicher (36) gespeicherter Energie an mindestens einen elektrischen Verbraucher (44) der elektrischen Energiespeichervorrichtung (12), so zu verbessern, dass die elektrische Energiespeichervorrichtung (12) eine möglichst lange Lebensdauer aufweist, wird vorgeschlagen, dass die Steuereinrichtung (40) ausgebildet ist zum Aktivieren der Entladeeinrichtung (42) nach einer vorgegebenen Ladezustandserhaltungszeit.

Ferner wird ein verbessertes Verfahren zum mindestens teilweisen aktiven Entladen mindestens eines Energiespeichers (36) einer elektrischen Energiespeichervorrichtung (12) vorgeschlagen.

## Beschreibung

Die vorliegende Erfindung betrifft ein elektrisches Energiespeichervorrichtungssystem umfassend eine elektrische Energiespeichervorrichtung für ein Elektrogerät, welche elektrische Energiespeichervorrichtung mindestens einen elektrischen Energiespeicher und eine Steuereinrichtung zum Steuern und Überwachen eines Ladezustands des mindestens einen elektrischen Energiespeichers umfasst, welche Steuereinrichtung ausgebildet ist zum Aktivieren einer Entladeeinrichtung zum Entladen des mindestens einen Energiespeichers durch Abgabe von im mindestens einen elektrischen Energiespeicher gespeicherter Energie an mindestens einen elektrischen Verbraucher der elektrischen Energiespeichervorrichtung.

Ferner betrifft die vorliegende Erfindung ein Verfahren zum mindestens teilweisen aktiven Entladen mindestens eines Energiespeichers einer elektrischen Energiespeichervorrichtung.

Eine elektrische Energiespeichervorrichtung der eingangs beschriebenen Art ist beispielsweise in Form eines sogenannten Akkupacks mit Energiespeichern in Form von Lithium-Ionen-Akkus bekannt. Diese Akkus haben das Problem, dass sie deutlich schneller altern, wenn sie vollständig aufgeladen sind, also auf maximale Spannung geladen gelagert werden. Der Grund hierfür ist, dass sie sich aufgrund der hohen Spannung chemisch schneller zersetzen. Es ist daher günstig, zu Lagerzwecken die Lithium-Ionen-Akkus nur teilweise zu laden.

Kunden von Elektrogeräten, die elektrische Energiespeichervorrichtungen der eingangs beschriebenen Art nutzen, wird daher empfohlen, die Akkus nur teilgeladen längere Zeit zu lagern, um deren Lebensdauer zu verlängern.

Nutzer, die direkt nach dem Gebrauch eines Elektrogeräte dessen elektrische Energiespeichervorrichtung, also den Akkupack, wieder vollständig aufladen, verkürzen daher die Lebensdauer des Akkupacks, wenn sie diesen vollgeladen längere Zeit, insbesondere mehrere Wochen, lagern.

Es ist daher eine Aufgabe der vorliegenden Erfindung, ein elektrisches Energiespeichervorrichtungssystem und ein Verfahren der eingangs beschriebenen Art zu verbessern, dass die elektrische Energiespeichervorrichtung eine möglichst lange Lebensdauer aufweist.

Diese Aufgabe wird bei einem elektrischen Energiespeichervorrichtungssystem der eingangs beschriebenen Art erfindungsgemäß dadurch gelöst, dass die Steuereinrichtung ausgebildet ist zum automatischen Aktivieren der Entladeeinrichtung nach einer vorgegebenen Ladezustandserhaltungszeit.

Die erfindungsgemäß vorgeschlagene Weiterbildung eines bekannten elektrischen Energiespeichervorrichtungssystems verhindert ein dauerhaftes Lagern der vollständig geladenen Energiespeichervorrichtung insbesondere dadurch, dass die Steuereinrichtung automatisch die Entladeeinrichtung aktiviert, um nach einer vorgegebenen Ladezustandserhaltungszeit den mindestens einen elektrischen Energiespeicher mindestens teilweise zu entladen, beispielsweise auf einen vorgegebenen Ladewert, zum Beispiel 75% einer vollständigen Ladung oder 75% einer maximal verfügbaren elektrischen Spannung der vollgeladenen Energiespeichervorrichtung. Die Ladezustandserhaltungszeit kann insbesondere diejenige Zeit sein, die seit einer letzten Aktivierung oder seit dem Ende einer letzten Entnahme elektrischer Energie aus der elektrischen Energiespeichervorrichtung verstrichen ist. Beispielsweise kann das automatische Entladen nach sieben Tagen oder zehn Tagen einer Nichtbenutzung der elektrischen Energiespeichervorrichtung automatisch erfolgen. Durch die automatische Entladefunktion der elektrischen Energiespeichervorrichtung muss sich ein Nutzer keine Gedanken darüber machen, ob er die elektrische Energiespeichervorrichtung vollgeladen oder teilgeladen lagert. Er kann daher nach einem Einsatz die elektrische Energiespeichervorrichtung vollständig aufladen. Eine Lebensdauer der elektrischen Energiespeichervorrichtung wird dadurch nicht signifikant verkürzt, auch wenn die elektrische Energiespeichervorrichtung über einen längeren Zeitraum nicht genutzt wird. Dies verhindert das automatische, mindestens teilweise Entladen des mindestens einen elektrischen Energiespeichers nach der vorgegebenen Ladezustandserhaltungszeit.

Günstig ist es, wenn die elektrische Energiespeichervorrichtung eine Zeitmesseinrichtung und eine Vergleichseinrichtung umfasst, welche Zeitmesseinrichtung ausgebildet ist zum Messen einer Betätigungszeit ab oder nach einer bestimmungsgemäßen Entnahme von elektrischer Energie aus der Energiespeichervorrichtung durch ein Elektrogerät oder ab oder nach einem bestimmungsgemäßen Laden der Energiespeichervorrichtung und welche Vergleichseinrichtung ausgebildet ist zum Vergleichen der Betätigungszeit und der vorgegebenen Ladezustandserhaltungszeit. Durch die Zeitmesseinrichtung und die Vergleichseinrichtung ist es möglich, die Steuereinrichtung dann zu aktivieren, wenn seit oder nach einer bestimmungsgemäßen Entnahme von elektrischer Energie aus der Energiespeichervorrichtung die vorgegebene Ladezustandserhaltungszeit verstrichen ist. Ab einer bestimmungsgemäßen Entnahme von elektrischer Energie aus der Energiespeichervorrichtung bedeutet insbesondere, dass die Zeitmesseinrichtung die Betätigungszeit misst nach Aktivierung beispielsweise des Elektrogeräts, insbesondere eines elektrischen Verbrauchers desselben. Dies kann beispielsweise durch eine Betätigungseinrichtung am Elektrogerät getriggert werden, beispielsweise einen Schalter oder Taster. Die Zeitmesseinrichtung nach einer bestimmungsgemäßen Entnahme von elektrischer Energie aus der Energiespeichervorrichtung zu starten bedeutet insbesondere, dass mit Unterbrechung eines Energieflusses aus der elektrischen Energiespeichervorrichtung zum Elektrogerät die Zeitmesseinrichtung gestartet und ab diesem Zeitpunkt die Betätigungszeit gemessen wird. In diesem Fall entspricht die Ladezustandserhaltungszeit dann einer Zeitdauer, während der keine elektrische Energie aus der elektrischen Energiespeichervorrichtung entnommen wurde.

Vorteilhaft ist es, wenn die Steuereinrichtung ausgebildet ist zum Aktivieren der Entladeeinrichtung, wenn die Betätigungszeit mindestens der Ladezustandserhaltungszeit entspricht. Diese Ausgestaltung der Steuereinrichtung verhindert insbesondere das automatische Entladen des mindestens einen Energiespeichers, wenn die Betätigungszeit kürzer als die vorgegebene Ladezustandserhaltungszeit ist. Mit anderen Worten bedeutet dies insbesondere, dass die Zeitmesseinrichtung die Betätigungszeit neu startet oder auf einen Startwert zurücksetzt, wenn erneut elektrische Energie aus der Energiespeichervorrichtung entnommen wird, bevor die Betätigungszeit der Ladezustandserhaltungszeit entspricht.

Günstig ist es, wenn die Zeitmesseinrichtung ausgebildet ist zum Zurücksetzen der Betätigungszeit auf einen Startwert mit Beginn oder Beendigung einer bestimmungsgemäßen Entnahme von elektrischer Energie aus der Energiespeichervorrichtung durch ein Elektrogerät oder ab oder nach einem bestimmungsgemäßen Laden der Energiespeichervorrichtung. Eine derart ausgebildete Zeitmesseinrichtung ermöglicht es insbesondere, die Betätigungszeit wieder zurückzusetzen, beispielsweise auf den Startwert, wenn beispielsweise mit einer bestimmungsgemäßen Entnahme von elektrischer Energie aus der Energiespeichervorrichtung begonnen wird. Dies kann insbesondere durch eine Betätigung des Elektrogeräts initiiert werden. Alternativ kann die Betätigungszeit auch zurückgesetzt werden, wenn die Entnahme von elektrischer Energie aus der Energiespeichervorrichtung durch ein Elektrogerät oder ein Ladevorgang beendet wird oder beim Laden der Lagerzustands-Ladewert oder eine vorgegebene maximale Lagerspannung. So wird insbesondere verhindert, dass während eines Einsatzes des Elektrogeräts vor Erreichen der Ladezustandserhaltungszeit die Betätigungszeit weiter erhöht, sondern wieder zurückgesetzt wird. Nur dann, wenn tatsächlich keine Betätigung seit einer letzten Entnahme oder seit einer letzten Betätigung beispielsweise des Elektrogeräts für einen Zeitraum erfolgt ist, der der Ladezustandserhaltungszeit entspricht, wird der mindestens eine Energiespeicher automatisch entladen.

Vorzugsweise ist der Startwert Null. Dies bedeutet insbesondere, dass die Betätigungszeit auf Null zurückgesetzt wird mit Beginn oder Beendigung einer bestimmungsgemäßen Entnahme von elektrischer Energie aus der Energiespeichervorrichtung oder mit Beginn oder Beendigung eines bestimmungsgemäßen Ladens des mindestens einen Energiespeichers, beispielsweise bis zu einem vordefinierten Spannungswert des mindestens einen Energiespeichers oder der Energiespeichervorrichtung.

Besonders einfach und kompakt ausbilden lässt sich die elektrische Energiespeichervorrichtung, wenn die Steuereinrichtung die Zeitmesseinrichtung und/oder die Vergleichseinrichtung umfasst. Beispielsweise kann die Steuereinrichtung in Form einer elektrischen oder elektronischen Schaltungsanordnung ausgebildet sein, die die Zeitmesseinrichtung und/oder die Vergleichseinrichtung als Bestandteil der Schaltungsanordnung oder als Teil eines auf der Steuereinrichtung ablaufenden Programms umfasst.

Vorzugsweise weist die Ladezustandserhaltungszeit einen Wert in einem Bereich von etwa 7 bis 21 Tagen auf. Insbesondere kann sie einen Wert in einem Bereich von 12 bis 16 Tagen aufweisen. Beispielsweise lässt sich so die Energiespeichervorrichtung automatisch nach Ablauf einer Betätigungszeit von etwa 7 bis 21 Tagen automatisch entladen.

Günstigerweise umfasst die elektrische Energiespeichervorrichtung eine Speichereinrichtung zum Speichern der Ladezustandserhaltungszeit. Die Ladezustandserhaltungszeit ist so dauerhaft in der Energiespeichervorrichtung hinterlegt. Sie kann wahlweise unveränderbar oder aber auch veränderbar hinterlegt sein. Insbesondere kann eine Eingabeeinrichtung vorgesehen sein, um die Ladezustandserhaltungszeit individuell, insbesondere um Nutzer der Energiespeichervorrichtung, einzugeben und gegebenenfalls zu ändern.

Besonders kompakt ausbilden lässt sich die Energiespeichervorrichtung, wenn die Steuereinrichtung die Speichereinrichtung umfasst. Beispielsweise kann die Steuereinrichtung eine Speichereinrichtung umfassen, die dann auch die Ladezustandserhaltungszeit speichern kann.

Vorteilhaft ist es, wenn die Energiespeichervorrichtung eine Aktivierungseinrichtung zum Aktivieren der Zeitmesseinrichtung umfasst. Die Aktivierungseinrichtung kann also insbesondere die Zeitmesseinrichtung starten, die dann die Betätigungszeit ab dem jeweils vordefinierten Ereignis misst, beispielsweise ab dem Beginn oder der Beendigung einer bestimmungsgemäßen Entnahme von elektrischer Energie aus der Energiespeichervorrichtung oder ab dem Beginn oder der Beendigung eines bestimmungsgemäßen Ladevorgangs des mindestens einen Energiespeichers, beispielsweise bis zu einem vordefinierten Spannungswert des mindestens einen Energiespeichers oder der Energiespeichervorrichtung.

Günstig ist es, wenn die Aktivierungseinrichtung eine Entladestrommesseinrichtung umfasst zum Messen eines Ladestroms beim bestimmungsgemäßen Laden der Energiespeichervorrichtung und/oder zum Messen eines Entladestroms bei der bestimmungsgemäßen Entnahme von elektrischer Energie aus der Energiespeichervorrichtung durch ein Elektrogerät. Die Entladestrommesseinrichtung ermöglicht es insbesondere, durch Messen eines Entladestroms zu detektieren, ob mit der Entnahme elektrischer Energie aus dem mindestens einen Energiespeicher der Energiespeichervorrichtung begonnen wird oder ob eine Energieentnahme beendet wird. Steigt der Entladestrom signifikant an, kann die Aktivierungseinrichtung den Beginn einer Entnahme feststellen, fällt der Entladestrom signifikant ab, kann die Aktivierungseinrichtung eine Beendigung der Entnahme detektieren. So kann die Zeitmesseinrichtung automatisch auf einfache Weise aktiviert werden. Dies kann entsprechend auch erfolgen mit Beginn oder Beendigung eines bestimmungsgemäßen Ladens des mindestens einen Energiespeichers, beispielsweise bis zu einem vordefinierten Spannungswert des mindestens einen Energiespeichers oder der Energiespeichervorrichtung oder wenn der mindestens eine Energiespeicher vollständig geladen ist.

Vorteilhafterweise ist die Aktivierungseinrichtung ausgebildet zum Aktivieren der Zeitmesseinrichtung in Abhängigkeit eines Entladestromgradients, welcher einen von Null verschiedenen Wert aufweist. So kann insbesondere durch ein Maß des Ansteigens oder des Abfallens des Entladestroms die Zeitmesseinrichtung aktiviert werden.

Gemäß einer weiteren bevorzugten Ausführungsform kann vorgesehen sein, dass die Entladeeinrichtung ausgebildet ist zum Entladen des mindestens einen elektrischen Energiespeichers von einem Ist-Ladewert auf einen vorgegebenen Lagerzustands-Ladewert. Das mindestens teilweise Entladen des mindestens einen Energiespeichers der Energiespeichervorrichtung erfolgt also ganz gezielt nicht für eine bestimmte Zeit, sondern nur bis ein vorgegebener Lagerzustands-Ladewert erreicht ist. Dieser kann insbesondere einen Kompromiss darstellen, um einerseits noch eine ausreichende Restkapazität für einen nächsten Einsatz der Energiespeichervorrichtung in Verbindung mit einem Elektrogerät zur Verfügung zu haben und eine möglichst lange Lebensdauer der Energiespeichervorrichtung zu ermöglichen.

Günstig ist es, wenn die Entladeeinrichtung ausschließlich aktivierbar ist, wenn der Ist-Ladewert größer als der Lagerzustands-Ladewert ist. Auf diese Weise kann verhindert werden, dass mit der Entladeeinrichtung der mindestens eine Energiespeicher der Energiespeichervorrichtung zu sehr entladen wird.

Vorteilhaft ist es, wenn der Lagerzustands-Ladewert einen Wert in einem Bereich von etwa 50% bis etwa 70% eines Maximal-Ladewerts, welcher einer maximalen Ladung des mindestens einen Energiespeichers entspricht, aufweist. Eine maximale Ladung kann insbesondere auch einer maximal möglichen Spannung entsprechen, die die Energiespeichervorrichtung bereitstellen kann.

Besonders einfach und kompakt ausbilden lässt sich die Energiespeichervorrichtung, wenn die Steuereinrichtung die Entladeeinrichtung umfasst. Es sind dann keine zusätzlichen Bauteile und Einrichtungen erforderlich, um die Energiespeichervorrichtung wie beschrieben automatisch zu entladen.

Vorzugsweise ist der mindestens eine elektrische Verbraucher in Form eines Widerstands ausgebildet. So lässt sich beim Entladen die elektrische Energie mittels des Widerstands oder der Widerstände in Wärme umwandeln. Insbesondere kann der Widerstand in Form eines Lastwiderstands ausgebildet sein. Der Widerstand kann insbesondere zur Vermeidung einer Überhitzung mit einem aktiven oder passiven Kühlelement verbunden sein.

Um die elektrische Energiespeichervorrichtung möglichst kompakt ausbilden zu können, ist es vorteilhaft, wenn die Steuereinrichtung den mindestens einen elektrischen Verbraucher umfasst. Der Entladevorgang wird also insbesondere dadurch vollzogen, dass elektrische Energie über mindestens einen elektrischen Verbraucher der Steuereinrichtung dissipiert wird. Beispielsweise können hier Lastwiderstände der Steuereinrichtung zum Entladen genutzt werden.

Günstigerweise ist der mindestens eine elektrische Energiespeicher in Form einer wiederaufladbaren Batterie ausgebildet. So lässt sich die Energiespeichervorrichtung mehrfach wiederaufladen und so wiederholt in Verbindung mit einem oder mehreren Elektrogeräten nutzen, um für diese elektrische Energie bereitzustellen.

Um eine Kapazität und optional auch eine Spannung der Energiespeichervorrichtung in gewünschter Weise vorgeben zu können, ist es vorteilhaft, wenn die Energiespeichervorrichtung eine Mehrzahl von elektrischen Energiespeichern umfasst. Diese können insbesondere teilweise seriell und teilweise parallel geschaltet sein. Die Anordnung und Verschaltung der Energiespeicher erfolgt insbesondere in Abhängigkeit von der gewünschten, von der Energiespeichervorrichtung bereitzustellenden Spannung und Kapazität.

Vorzugsweise umfasst das elektrische Energiespeichervorrichtungssystem mindestens ein Elektrogerät mit mindestens einem elektrischen Verbraucher. Das mindestens eine Elektrogerät kann insbesondere durch die elektrische Energiespeichervorrichtung mit elektrischer Energie versorgt werden, die im mindestens einen elektrischen Energiespeicher gespeicherte ist, insbesondere wenn das mindestens eine Elektrogerät und die elektrische Energiespeichervorrichtung mechanisch und elektrisch miteinander gekoppelt sind. Das elektrische Energiespeichervorrichtungssystem kann insbesondere eine Mehrzahl von elektrischen Energiespeichervorrichtungen optional auch eine Mehrzahl von Elektrogeräten umfassen, die wahlweise miteinander gekoppelt werden können.

Günstig ist es, wenn das elektrische Energiespeichervorrichtungssystem eine Kopplungseinrichtung zum kraft- und/oder formschlüssigen Koppeln des Elektrogeräts und der elektrischen Energiespeichervorrichtung in einer Kopplungsstellung umfasst, in welcher das Elektrogerät und die elektrische Energiespeichervorrichtung mechanisch und elektrisch miteinander gekoppelt sind. Die Kopplungseinrichtung ermöglicht es insbesondere, das Elektrogerät und die Energiespeichervorrichtung miteinander zu koppeln und auch wieder voneinander zu trennen. So kann beispielsweise die Energiespeichervorrichtung vom Elektrogerät entkoppelt, also getrennt, werden, wenn deren mindestens einer Energiespeicher keine elektrische Energie mehr enthält, wenn also die Energiespeichervorrichtung entleert ist. Das Elektrogerät kann dann unmittelbar weiter genutzt werden, wenn es mit einer anderen aufgeladenen Energiespeichervorrichtung gekoppelt wird.

Auf einfache Weise lässt sich das elektrische Energiespeichervorrichtungssystem ausbilden, wenn die Kopplungseinrichtung mindestens ein erstes Kopplungselement und mindestens ein zweites Kopplungselement umfasst, wenn das mindestens eine erste Kopplungselement an der elektrischen Energiespeichervorrichtung angeordnet oder ausgebildet ist, wenn das mindestens eine zweite Kopplungselement am Elektrogerät angeordnet oder ausgebildet ist und wenn das mindestens eine erste und das mindestens eine zweite Kopplungselement in der Kopplungsstellung kraft- und/oder formschlüssig in Eingriff stehen. Die mindestens einen ersten und zweiten Kopplungselemente dienen also insbesondere dazu, das Elektrogerät und die Energiespeichervorrichtung in der Kopplungsstellung kraft- und/oder formschlüssig zu verbinden.

Ferner ist es günstig, wenn das mindestens eine erste und das mindestens eine zweite Kopplungselement in einer Trennstellung, in welcher das mindestens eine Elektrogerät und die elektrische Energiespeichervorrichtung vollständig voneinander getrennt sind, außer Eingriff stehen. Wie beschrieben lassen sich so das mindestens eine Elektrogerät und die Energiespeichervorrichtung vollständig voneinander trennen, sodass bei Bereitstellung mehrerer Energiespeichervorrichtungen eine mit dem mindestens einen Elektrogerät gekoppelt und die andere gleichzeitig wiederaufgeladen werden kann. So ist quasi ein Dauerbetrieb des mindestens einen Elektrogeräts mit mehreren Energiespeichervorrichtungen möglich. Lediglich ein Wechsel der Energiespeichervorrichtungen nach deren Entleerung durch das Elektrogerät ist erforderlich.

Vorteilhaft ist es, wenn das elektrische Energiespeichervorrichtungssystem eine elektrische Ladevorrichtung zum Laden des mindestens einen Energiespeichers der elektrischen Energiespreichervorrichtung umfasst. Mit der Ladevorrichtung lässt sich insbesondere der mindestens eine Energiespeicher der elektrischen Energiespeichervorrichtung nach einem Einsatz wieder vollständig oder mindestens teilweise aufladen, beispielsweise bis der Lagerzustands-Ladewert erreicht ist.

Die eingangs gestellte Aufgabe wird ferner bei einem Verfahren der eingangs beschriebenen Art erfindungsgemäß dadurch gelöst, dass der mindestens eine Energiespeicher nach einer vorgegebenen Ladezustandserhaltungszeit automatisch mindestens teilweise entladen wird.

Wie beschrieben kann so eine durch den mindestens einen Energiespeicher bereitgestellte Spannung verringert werden, wodurch sich die Gefahr eines chemischen Zersetzungsprozesses des mindestens einen Energiespeichers, insbesondere dann, wenn er in Form eines Lithium-Ionen-Akkus ausgebildet ist, verringern lässt.

Vorteilhaft ist es, wenn eine Betätigungszeit ab oder nach einer bestimmungsgemäßen Entnahme von elektrischer Energie aus der Energiespeichervorrichtung durch ein Elektrogerät oder ab oder nach einem bestimmungsgemäßen Laden der Energiespeichervorrichtung gemessen und mit der vorgegebenen Ladezustandserhaltungszeit verglichen wird und wenn der mindestens eine Energiespeicher automatisch mindestens teilweise entladen wird, wenn die Betätigungszeit mindestens der Ladezustandserhaltungszeit entspricht. So kann insbesondere eine automatische Entladung der Energiespeichervorrichtung erfolgen, wenn ab oder nach der bestimmungsgemäßen Entnahme von elektrischer Energie eine Zeitdauer abgelaufen ist, nämlich die Betätigungszeit, die mindestens der Ladezustandserhaltungszeit entspricht. Insbesondere kann die Betätigungszeit gemessen werden ab dem Zeitpunkt, beim dem beim Laden der vorgegebene Lagerzustands-Ladewert oder eine vorgegebene Lagerspannung der Energiespeichervorrichtung erreicht ist.

Vorzugsweise wird die Betätigungszeit mit Beginn oder Beendigung einer bestimmungsgemäßen Entnahme von elektrischer Energie aus der Energiespeichervorrichtung durch ein Elektrogerät oder ab oder nach einem bestimmungsgemäßen Laden der Energiespeichervorrichtung auf einen Startwert zurückgesetzt. Auf diese Weise kann vermieden werden, dass die Betätigungszeit weiter gemessen wird, wenn erneut elektrische Energie aus der Energiespeichervorrichtung durch das Elektrogerät entnommen wird. So lässt sich insbesondere vermeiden, dass der mindestens eine Energiespeicher entladen wird, wenn das Elektrogerät im Einsatz ist.

Auf besonders einfache Weise lässt sich das Verfahren durchführen, wenn der Startwert auf Null gesetzt wird. Grundsätzlich kann er natürlich auch auf jeden anderen Wert gesetzt werden.

Vorzugsweise wird die Ladezustandserhaltungszeit mit einem Wert in einem Bereich von etwa 7 bis 21 Tagen vorgegeben. Insbesondere kann sie in einem Bereich von 12 bis 16 Tagen vorgegeben werden. Auf diese Weise wird insbesondere sichergestellt, dass die Energiespeichervorrichtung mindestens teilweise entladen wird, wenn ab oder nach Beendigung einer Entnahme von elektrischer Energie aus der Energiespeichervorrichtung oder einer Ladung der Energiespeichervorrichtung über den Lagerzustands-Ladewert beziehungsweise eine Lagerspannung die Ladezustandserhaltungszeit in einem der vorgegebenen Bereiche abgelaufen ist. Ein Benutzer muss also nicht daran denken, die Energiespeichervorrichtung nach einer bestimmten Zeit manuell zu entladen. Dies erledigt die Energiespeichervorrichtung automatisch selbst.

Gemäß einer weiteren bevorzugten Variante des Verfahrens kann vorgesehen sein, dass die Betätigungszeit auf den Startwert zurückgesetzt wird, wenn ein Entladestromgradient eines Entladestroms bei der bestimmungsgemäßen Entnahme von elektrischer Energie aus der Energiespeichervorrichtung durch ein Elektrogerät einen von Null verschiedenen Wert aufweist. So kann insbesondere ermittelt werden, ob die Entnahme von elektrischer Energie aus der Energiespeichervorrichtung beginnt oder beendet ist.

Vorteilhaft ist es, wenn der mindestens eine Energiespeicher automatisch von einem Ist-Ladewert auf einen vorgegebenen Lagerzustands-Ladewert teilweise entladen wird. Insbesondere kann der Lagerzustands-Ladewert derart vorgegeben werden, dass die Energiespeichervorrichtung zwar noch elektrische Energie gespeichert hat, eine Lebensdauer im Vergleich zu einer Vollladung des mindestens einen Energiespeichers jedoch deutlich verlängert ist.

Um ein unerwünschtes Vollentladen der Energiespeichervorrichtung zu vermeiden, ist es günstig, wenn der mindestens eine Energiespeicher nur dann automatisch mindestens teilweise entladen wird, wenn der Ist-Ladewert größer als der Lagerzustands-Ladewert ist. Ist der Ist-Ladewert kleiner als der Lagerzustands-Ladewert und ist die Energiespeichervorrichtung beispielsweise mit der Ladevorrichtung 70 gekoppelt, kann optional auch vorgesehen sein, den mindestens einen Energiespeicher auf den Lagerzustands-Ladewert aufzuladen.

Vorteilhaft ist es, wenn als Lagerzustands-Ladewert ein Wert in einem Bereich von etwa 50% bis etwa 70% eines Maximal-Ladewerts, welcher einer maximalen Ladung des mindestens einen Energiespeichers entspricht, vorgegeben wird. Vorzugsweise wird der Lagerzustands-Ladewert so vorgegeben, dass die Gefahr einer chemischen Selbstzersetzung des mindestens einen Energiespeichers minimiert wird bei gleichzeitig größtmöglicher verbleibender Ladung elektrischer Energie im mindestens einen Energiespeicher.

Um keine zusätzlichen Geräte vorsehen zu müssen, die mit der Energiespeichervorrichtung gekoppelt werden müssen, um diese mindestens teilweise zu entladen, ist es günstig, wenn der mindestens eine Energiespeicher automatisch durch Abgabe von im mindestens einen elektrischen Energiespeicher gespeicherter Energie an mindestens einen elektrischen Verbraucher der elektrischen Energiespeichervorrichtung mindestens teilweise entladen wird. Beispielsweise können elektrische Widerstände genutzt werden, um elektrische Energie durch Umwandlung in Wärme zu verbrauchen. So kann auf einfache Weise der mindestens eine Energiespeicher entladen werden.

Die vorstehende Beschreibung umfasst somit insbesondere die nachfolgend in Form durchnummerierter Sätze definierten Ausführungsformen elektrischer Energiespeichervorrichtungssysteme und Verfahren zum mindestens teilweisen aktiven Entladen mindestens eines Energiespeichers einer elektrischen Energiespeichervorrichtung :
1. Elektrisches Energiespeichervorrichtungssystem (100) umfassend eine elektrische Energiespeichervorrichtung (12) für ein Elektrogerät (10), welche elektrische Energiespeichervorrichtung (12) mindestens einen elektrischen Energiespeicher (36) und eine Steuereinrichtung (40) zum Steuern und Überwachen eines Ladezustands des mindestens einen elektrischen Energiespeichers (36) umfasst, welche Steuereinrichtung (40) ausgebildet ist zum Aktivieren einer Entladeeinrichtung (42) zum Entladen des mindestens einen Energiespeichers (36) durch Abgabe von im mindestens einen elektrischen Energiespeicher (36) gespeicherter Energie an mindestens einen elektrischen Verbraucher (44) der elektrischen Energiespeichervorrichtung (12), dadurch gekennzeichnet, dass die Steuereinrichtung (40) ausgebildet ist zum automatischen Aktivieren der Entladeeinrichtung (42) nach einer vorgegebenen Ladezustandserhaltungszeit.
2. Elektrisches Energiespeichervorrichtungssystem nach Satz 1, gekennzeichnet durch eine Zeitmesseinrichtung (48) und durch eine Vergleichseinrichtung (50), welche Zeitmesseinrichtung (48) ausgebildet ist zum Messen einer Betätigungszeit ab oder nach einer bestimmungsgemäßen Entnahme von elektrischer Energie aus der Energiespeichervorrichtung (12) durch ein Elektrogerät (10) oder ab oder nach einem bestimmungsgemäßen Laden der Energiespeichervorrichtung (12) und welche Vergleichseinrichtung (50) ausgebildet ist zum Vergleichen der Betätigungszeit und der vorgegebenen Ladezustandserhaltungszeit.
3. Elektrisches Energiespeichervorrichtungssystem nach Satz 2, dadurch gekennzeichnet, dass die Steuereinrichtung (40) ausgebildet ist zum Aktivieren der Entladeeinrichtung (42), wenn die Betätigungszeit mindestens der Ladezustandserhaltungszeit entspricht.
4. Elektrisches Energiespeichervorrichtungssystem nach Satz 2 oder 3, dadurch gekennzeichnet, dass die Zeitmesseinrichtung (48) ausgebildet ist zum Zurücksetzen der Betätigungszeit auf einen Startwert mit Beginn oder Beendigung einer bestimmungsgemäßen Entnahme von elektrischer Energie aus der Energiespeichervorrichtung (12) durch ein Elektrogerät (10) oder ab oder nach einem bestimmungsgemäßen Laden der Energiespeichervorrichtung (12).
5. Elektrisches Energiespeichervorrichtungssystem nach Satz 4, dadurch gekennzeichnet, dass der Startwert Null ist.
6. Elektrisches Energiespeichervorrichtungssystem nach einem der Sätze 2 bis 5, dadurch gekennzeichnet, dass die Steuereinrichtung (40) die Zeitmesseinrichtung (48) und/oder die Vergleichseinrichtung (50) umfasst.
7. Elektrisches Energiespeichervorrichtungssystem nach einem der voranstehenden Sätze, dadurch gekennzeichnet, dass die Ladezustandserhaltungszeit einen Wert in einem Bereich von etwa 7 bis 21 Tagen, insbesondere in einem Bereich von 12 bis 16 Tagen, aufweist.
8. Elektrisches Energiespeichervorrichtungssystem nach einem der voranstehenden Sätze, gekennzeichnet durch eine Speichereinrichtung (52) zum Speichern der Ladezustandserhaltungszeit.
9. Elektrisches Energiespeichervorrichtungssystem nach Satz 8, dadurch gekennzeichnet, dass die Steuereinrichtung (40) die Speichereinrichtung (52) umfasst.
10. Elektrisches Energiespeichervorrichtungssystem nach einem der Sätze 2 bis 9, gekennzeichnet durch eine Aktivierungseinrichtung (54) zum Aktivieren der Zeitmesseinrichtung (48).
11. Elektrisches Energiespeichervorrichtungssystem nach Satz 10, dadurch gekennzeichnet, dass die Aktivierungseinrichtung (54) eine Lade-/Entladestrommesseinrichtung (56) umfasst zum Messen eines Ladestroms beim bestimmungsgemäßen Laden der Energiespeichervorrichtung (12) und/oder zum Messen eines Entladestroms bei der bestimmungsgemäßen Entnahme von elektrischer Energie aus der Energiespeichervorrichtung (12) durch ein Elektrogerät (10).
12. Elektrisches Energiespeichervorrichtungssystem nach Satz 10 oder 11, dadurch gekennzeichnet, dass die Aktivierungseinrichtung (54) ausgebildet ist zum Aktivieren der Zeitmesseinrichtung (48) in Abhängigkeit eines Entladestromgradients, welcher einen von Null verschiedenen Wert aufweist.
13. Elektrisches Energiespeichervorrichtungssystem nach einem der voranstehenden Sätze, dadurch gekennzeichnet, dass die Entladeeinrichtung (42) ausgebildet ist zum Entladen des mindestens einen elektrischen Energiespeichers (36) von einem Ist-Ladewert auf einen vorgegebenen Lagerzustands-Ladewert.
14. Elektrisches Energiespeichervorrichtungssystem nach Satz 13, dadurch gekennzeichnet, dass die Entladeeinrichtung (42) ausschließlich aktivierbar ist, wenn der Ist-Ladewert größer als der Lagerzustands-Ladewert ist.
15. Elektrisches Energiespeichervorrichtungssystem nach Satz 13 oder 14, dadurch gekennzeichnet, dass der Lagerzustands-Ladewert einen Wert in einem Bereich von etwa 50% bis etwa 70% eines Maximal-Ladewerts, welcher einer maximalen Ladung des mindestens einen Energiespeichers (36) entspricht, aufweist.
16. Elektrisches Energiespeichervorrichtungssystem nach einem der voranstehenden Sätze, dadurch gekennzeichnet, dass die Steuereinrichtung (40) die Entladeeinrichtung (42) umfasst.
17. Elektrisches Energiespeichervorrichtungssystem nach einem der voranstehenden Sätze, dadurch gekennzeichnet, dass der mindestens eine elektrische Verbraucher (44) in Form eines Widerstands (46) ausgebildet ist.
18. Elektrisches Energiespeichervorrichtungssystem nach einem der voranstehenden Sätze, dadurch gekennzeichnet, dass die Steuereinrichtung (40) den mindestens einen elektrischen Verbraucher (46) umfasst.
19. Elektrisches Energiespeichervorrichtungssystem nach einem der voranstehenden Sätze, dadurch gekennzeichnet, dass der mindestens eine elektrische Energiespeicher (36) in Form einer wiederaufladbaren Batterie (38) ausgebildet ist.
20. Elektrisches Energiespeichervorrichtungssystem nach einem der voranstehenden Sätze, gekennzeichnet durch eine Mehrzahl von elektrischen Energiespeichern (36).
21. Elektrisches Energiespeichervorrichtungssystem nach einem der voranstehenden Sätze, gekennzeichnet durch mindestens ein Elektrogerät (10) mit mindestens einem elektrischen Verbraucher (14).
22. Elektrisches Energiespeichervorrichtungssystem nach Satz 21, gekennzeichnet durch eine Kopplungseinrichtung (24) zum kraft- und/oder formschlüssigen Koppeln des mindestens einen Elektrogeräts (10) und der elektrischen Energiespeichervorrichtung (12) in einer Kopplungsstellung, in welcher das mindestens eine Elektrogerät (10) und die elektrische Energiespeichervorrichtung (12) mechanisch und elektrisch miteinander gekoppelt sind.
23. Elektrisches Energiespeichervorrichtungssystem nach Satz 22, dadurch gekennzeichnet, dass die Kopplungseinrichtung (24) mindestens ein erstes Kopplungselement (26) und mindestens ein zweites Kopplungselement (28) umfasst, dass das mindestens eine erste Kopplungselement (26) an der elektrischen Energiespeichervorrichtung (12) angeordnet oder ausgebildet ist, dass das mindestens eine zweite Kopplungselement (28) am mindestens einen Elektrogerät (10) angeordnet oder ausgebildet und dass das mindestens eine erste und das mindestens eine zweite Kopplungselement (26, 28) in der Kopplungsstellung kraft- und/oder formschlüssigen in Eingriff stehen.
24. Elektrisches Energiespeichervorrichtungssystem nach Satz 23, dadurch gekennzeichnet, dass das mindestens eine erste und das mindestens eine zweite Kopplungselement (26, 28) in einer Trennstellung, in welcher das mindestens eine Elektrogerät (10) und die elektrische Energiespeichervorrichtung (12) vollständig voneinander getrennt sind, außer Eingriff stehen.
25. Elektrisches Energiespeichervorrichtungssystem nach einem der voranstehenden Sätze, gekennzeichnet durch eine elektrische Ladevorrichtung (70) zum Laden des mindestens einen Energiespeichers (36) der elektrischen Energiespeichervorrichtung (12).
26. Verfahren zum mindestens teilweisen aktiven Entladen mindestens eines Energiespeichers (36) einer elektrischen Energiespeichervorrichtung (12), dadurch gekennzeichnet, dass der mindestens eine Energiespeicher (36) nach einer vorgegebenen Ladezustandserhaltungszeit automatisch mindestens teilweise entladen wird.
27. Verfahren nach Satz 26, dadurch gekennzeichnet, dass eine Betätigungszeit ab oder nach einer bestimmungsgemäßen Entnahme von elektrischer Energie aus der Energiespeichervorrichtung (12) durch ein Elektrogerät (10) oder ab oder nach einem bestimmungsgemäßen Laden der Energiespeichervorrichtung (12) gemessen und mit der vorgegebenen Ladezustandserhaltungszeit verglichen wird und dass der mindestens eine Energiespeicher (36) automatisch mindestens teilweise entladen wird, wenn die Betätigungszeit mindestens der Ladezustandserhaltungszeit entspricht.
28. Verfahren nach Satz 27, dadurch gekennzeichnet, dass die Betätigungszeit mit Beginn oder Beendigung einer bestimmungsgemäßen Entnahme von elektrischer Energie aus der Energiespeichervorrichtung (12) durch ein Elektrogerät (10) oder ab oder nach einem bestimmungsgemäßen Laden der Energiespeichervorrichtung (12) auf einen Startwert zurückgesetzt wird.
29. Verfahren nach Satz 28, dadurch gekennzeichnet, dass der Startwert auf Null gesetzt wird.
30. Verfahren nach einem der Sätze 26 bis 29, dadurch gekennzeichnet, dass die Ladezustandserhaltungszeit mit einem Wert in einem Bereich von etwa 7 bis 21 Tagen, insbesondere in einem Bereich von 12 bis 16 Tagen, vorgegeben wird.
31. Verfahren nach einem der Sätze 28 bis 30, dadurch gekennzeichnet, dass die Betätigungszeit auf den Startwert zurückgesetzt wird, wenn ein Entladestromgradient eines Entladestroms bei der bestimmungsgemäßen Entnahme von elektrischer Energie aus der Energiespeichervorrichtung (12) durch ein Elektrogerät (10) einen von Null verschiedenen Wert aufweist.
32. Verfahren nach einem der Sätze 26 bis 31, dadurch gekennzeichnet, dass der mindestens eine Energiespeicher (36) automatisch von einem Ist-Ladewert auf einen vorgegebenen Lagerzustands-Ladewert teilweise entladen wird.
33. Verfahren nach Satz 32, dadurch gekennzeichnet, dass der mindestens eine Energiespeicher (36) nur dann automatisch mindestens teilweise entladen wird, wenn der Ist-Ladewert größer als der Lagerzustands-Ladewert ist.
34. Verfahren nach Satz 32 oder 33, dadurch gekennzeichnet, dass als Lagerzustands-Ladewert ein Wert in einem Bereich von etwa 50% bis etwa 70% eines Maximal-Ladewerts, welcher einer maximalen Ladung des mindestens einen Energiespeichers (36) entspricht, vorgegeben wird.
35. Verfahren nach einem der Sätze 26 bis 34, dadurch gekennzeichnet, dass der mindestens eine Energiespeicher (36) automatisch durch Abgabe von im mindestens einen elektrischen Energiespeicher (36) gespeicherter Energie an mindestens einen elektrischen Verbraucher (44) der elektrischen Energiespeichervorrichtung (12) mindestens teilweise entladen wird.

Die nachfolgende Beschreibung bevorzugter Ausführungsformen der Erfindung dient im Zusammenhang mit der Zeichnung der näheren Erläuterung. Es zeigen:
- Figur 1:: eine schematische Darstellung eines mit einer elektrischen Energiespeichervorrichtung in einer Kopplungsstellung gekoppelten Elektrogeräts; und
- Figur 2:: eine beispielhafte Darstellung eines zeitlichen Verlaufs eines Ladewerts der elektrischen Energiespeichervorrichtung.

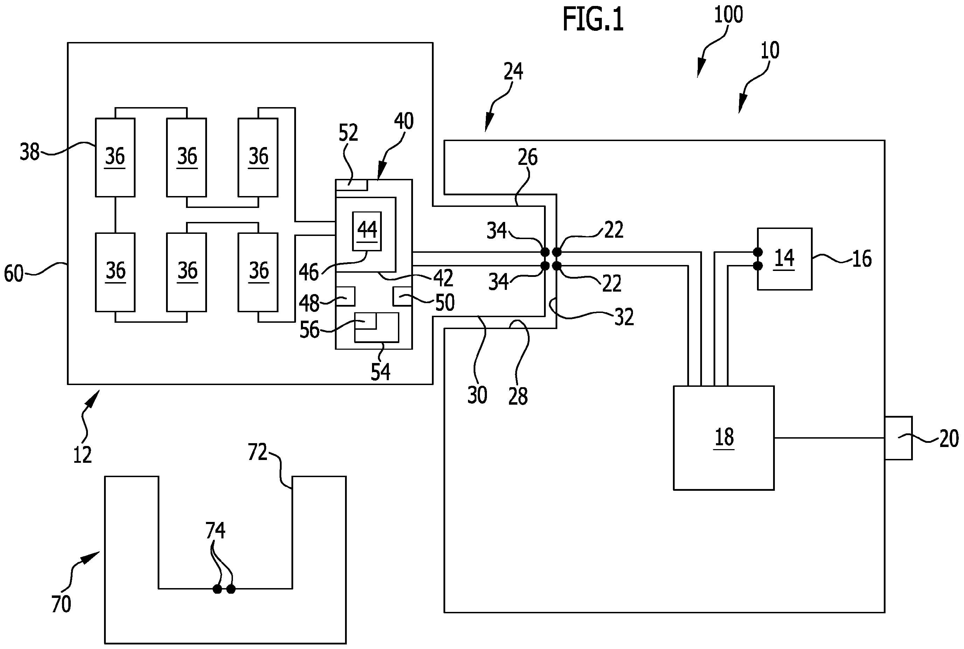

In Figur 1 ist schematisch ein elektrisches Energiespeichervorrichtungssystem 100 dargestellt. Es umfasst eine elektrische Energiespeichervorrichtung 12.

Das elektrische Energiespeichervorrichtungssystem 100 kann optional mindestens ein Elektrogerät 10 umfassen. Figur 1 zeigt beispielhaft ein Elektrogerät 10, welches in einer Kopplungsstellung mit der elektrischen Energiespeichervorrichtung 12 gekoppelt ist.

Weiter kann das elektrische Energiespeichervorrichtungssystem 100 optional mindestens eine Ladevorrichtung 70 mit einer Ladeausnehmung 72 zum Aufladen der elektrischen Energiespeichervorrichtung 12 umfassen.

Das Elektrogerät 10 umfasst einen elektrischen Verbraucher 14, beispielsweise in Form eines Elektromotors 16 zum Antreiben von Werkzeugen. Das Elektrogerät 10 kann beispielsweise in Form eines Rasenmähers, einer Heckenschere, einer Bohrmaschine oder dergleichen ausgebildet sein.

Der Verbraucher 14 kann insbesondere steuerungswirksam mit einer Steuereinrichtung 18 verbunden sein, die zudem optional mit einer Betätigungseinrichtung 20 steuerungswirksam verbunden sein kann. Die Betätigungseinrichtung 20 kann insbesondere in Form eines Schalters oder Tasters ausgebildet sein.

Am Elektrogerät 10 sind ferner mindestens zwei Anschlusskontakte 22 ausgebildet, die insbesondere steuerungswirksam mit der Steuereinrichtung 18 und/oder direkt oder indirekt mit dem Verbraucher 14 verbunden sein können.

Zum kraft- und/oder formschlüssigen Koppeln des Elektrogeräts 10 mit der elektrischen Energiespeichervorrichtung 12 dient eine Kopplungseinrichtung 24 mit einem ersten Kopplungselement 26, welches an der elektrischen Energiespeichervorrichtung 12 angeordnet oder ausgebildet ist, und einer zum ersten Kopplungselement 26 korrespondierenden zweiten Kopplungselement 28, welches am Elektrogerät 10 ausgebildet ist.

Das erste Kopplungselement 26 kann insbesondere in Form eines Kopplungsvorsprungs 30 eines Gehäuses 60 der elektrischen Energiespeichervorrichtung 12 ausgebildet sein, das zweite Kopplungselement 28 in Form einer zum Kopplungsvorsprung 30 korrespondierenden Kopplungsausnehmung 32 an einem Gehäuse des Elektrogeräts 10.

Alternativ kann auch das zweite Kopplungselement 28 in Form eines Kopplungsvorsprungs ausgebildet sein und das erste Kopplungselement in Form einer Kopplungsausnehmung.

Es können auch mehrere erste und zweite Kopplungselemente 26 und 28 vorgesehen sein, die insbesondere als Vorsprünge und korrespondierende Ausnehmungen ausgebildet sind.

Die Anschlusskontakte 22 des Elektrogeräts 10 sind vorzugsweise im Bereich des zweiten Kopplungselements 28 ausgebildet. Sie stehen in der Kopplungsstellung mit korrespondierenden zweiten Anschlusskontakten 34 der elektrischen Energiespeichervorrichtung 12, die insbesondere am ersten Kopplungselement 26 oder im Bereich desselben angeordnet oder ausgebildet sind, in leitendem Kontakt, so dass über die miteinander verbundenen Anschlusskontakte 22 und 34 elektrische Energie von der Energiespeichervorrichtung 12 auf das Elektrogerät 10 übertragen werden kann.

Die elektrische Energiespeichervorrichtung 12 umfasst ein oder mehrere elektrische Energiespeicher 36. In Figur 1 sind schematisch sechs Energiespeicher 36 in Form von wiederaufladbaren Batterien 38 beispielhaft dargestellt. Diese sind, ebenfalls rein beispielhaft, in Serie geschaltet angeordnet, so dass sich die einzelnen Batteriespannungen der Batterien 38 zu einer Gesamtspannung der elektrischen Energiespeichervorrichtung 12 addieren.

Die Energiespeicher 36 sind steuerungswirksam mit einer Steuereinrichtung 40 verbunden. Diese Steuereinrichtung 40 ist zudem steuerungswirksam mit den Anschlusskontakten 34 verbunden.

Die Steuereinrichtung 40 ist insbesondere ausgebildet zum Steuern und Überwachen eines Ladezustands der Energiespeicher 36.

Die Energiespeichervorrichtung 12 umfasst ferner eine Entladeeinrichtung 42 zum automatischen Entladen der Energiespeicher 36 durch Abgabe von in den Energiespeichern 36 gespeicherter Energie an einen oder mehrere elektrische Verbraucher 44 der elektrischen Energiespeichervorrichtung 12. Bei dem Verbraucher 44 oder den Verbrauchern 44 kann es sich insbesondere um einen oder mehrere elektrische Widerstände 46 handeln, über den beziehungsweise über die ein Entladestrom aus den Energiespeichern 36 beim Entladen derselben strömt.

Die Steuereinrichtung 40 ist insbesondere derart ausgebildet, dass sie die Entladeeinrichtung 42 nach einer vorgegebenen Ladezustandserhaltungszeit t_{L} automatisch aktiviert, um die Energiespeicher 36 mindestens teilweise zu entladen.

Die Energiespeichervorrichtung 12 umfasst ferner eine Zeitmesseinrichtung 48 zum Messen einer Betätigungszeit t_{B} ab oder nach einer bestimmungsgemäßen Entnahmen von elektrischer Energie aus der Energiespeichervorrichtung 12 durch das Elektrogerät 10. Mit der Zeitmesseinrichtung 48 kann also beispielsweise die Zeit gemessen werden, die vergeht ab einer Betätigung der Betätigungseinrichtung 20, vorausgesetzt, das Elektrogerät 10 ist mit der Energiespeichervorrichtung 12 in der Kopplungsstellung mechanisch und elektrisch verbunden, beispielsweise durch die Kopplungseinrichtung 24.

Die Energiespeichervorrichtung 12 umfasst ferner eine Vergleichseinrichtung 50, welche ausgebildet ist zum Vergleichen der Betätigungszeit t_{B} und der vorgegebenen Ladezustandserhaltungszeit t_{L}.

Die Energiespeichervorrichtung 12 umfasst ferner eine Speichereinrichtung 52, in der die Ladezustandserhaltungszeit t_{L} abgespeichert ist.

Die Steuereinrichtung 40 kann insbesondere die Zeitmesseinrichtung 48, die Vergleichseinrichtung 50 und die Speichereinrichtung 52 umfassen.

Die Steuereinrichtung 40 ist ferner derart ausgebildet, dass sie die Entladeeinrichtung 42 aktiviert, wenn die Betätigungszeit t_{B} mindestens der Landezustandserhaltungszeit t_{L} entspricht. Dies wird wie beschrieben mit der Vergleichseinrichtung 50 ermittelt.

Die Energiespeichervorrichtung 12 kann optional auch eine Aktivierungseinrichtung 54 zum Aktivieren der Zeitmesseinrichtung 48 umfassen.

Die Aktivierungseinrichtung 54 kann insbesondere eine Lade-/Entladestrommesseinrichtung 56 umfassen zum Messen eines Ladestroms beim bestimmungsgemäßen Laden mit der Ladevorrichtung 70 und/oder zum Messen eines Entladestroms bei der bestimmungsgemäßen Entnahme von elektrischer Energie aus der Energiespeichervorrichtung 12 durch das Elektrogerät 10.

Insbesondere kann die Aktivierungseinrichtung 54 ausgebildet sein zum Aktivieren der Zeitmesseinrichtung 48 in Abhängigkeit eines Entladestromgradient, welcher einer von Null verschiedenen Wert aufweist. Ein Entladestromgradient weist insbesondere dann von einem Null verschiedenen Wert auf, wenn elektrische Energie aus den Energiespeichern 36 entnommen und über die miteinander verbundenen Anschlusskontakte 22 und 34 zum Elektrogerät 10 fließt. Der Entladestromgradient ist positiv, wenn die Entnahme von gespeicherter elektrischer Energie aus den Energiespeichern 36 beginnt. Er ist negativ, wenn die Entnahme beendet wird.

Die Zeitmesseinrichtung 48 ist insbesondere derart ausgebildet, dass sie die Betätigungszeit t_{B} auf einen Startwert t₀ mit Beginn oder Beendigung einer bestimmungsgemäßen Entnahme von elektrischer Energie aus der Energiespeichervorrichtung 12 durch das Elektrogerät 10 oder mit Beginn oder Beendigung eines Ladevorgangs durch die Ladevorrichtung 70 oder beim Erreichen des Lagerzustands-Ladewerts beziehungsweise der vorgegebenen Lagerspannung zurücksetzen kann. Beispielsweise kann der Startwert Null sein.

Die Ladezustandserhaltungszeit t_{L} kann insbesondere einen Wert in einem Bereich von etwa 7 bis 21 Tagen aufweisen. Beispielsweise kann sie einen Wert von 14 Tagen aufweisen. Die Ladungszustandserhaltungszeit kann insbesondere in Tagen, Stunden, Minuten oder Sekunden in der Speichereinrichtung 52 gespeichert sein.

Die Entladeeinrichtung 42 ermöglicht insbesondere das Entladen der Energiespeicher 36 von einem Ist-Ladewert auf einen vorgegebenen Lagerzustands-Ladewert. Dabei ist die Entladeeinrichtung 42 vorzugsweise ausschließlich aktivierbar, wenn der Ist-Ladewert größer als der Lagerzustands-Ladewert ist.

Der Lagerzustands-Ladewert kann insbesondere einen Wert in einem Bereich von etwa 50% bis etwa 70% eines Maximal-Ladewerts aufweisen. Der Maximal-Ladewert entspricht einer maximalen Ladung beziehungsweise Aufladung der Energiespeicher 36 der Energiespeichervorrichtung 12 von 100%.

Für einen besonders kompakten Aufbau der Energiespeichervorrichtung 12 kann die Steuereinrichtung 40 auch die Entladeeinrichtung 42 sowie optional auch die Aktivierungseinrichtung 54 und die Lade-/Entladestrommesseinrichtung 56 umfassen.

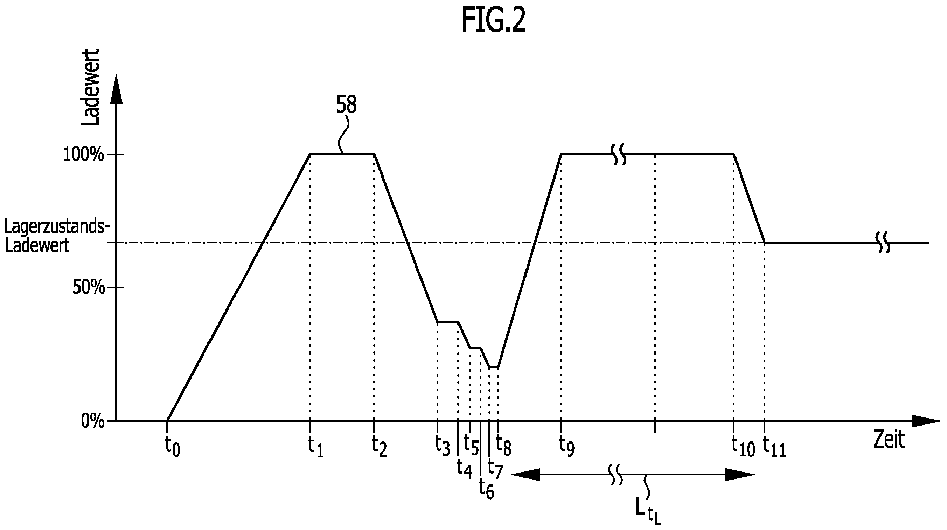

Die Funktionsweise der Energiespeichervorrichtung 12 zum automatischen mindestens teilweisen Entladen der Energiespeicher 36 wird nachfolgend in Verbindung mit Figur 2 beispielhaft erläutert.

Figur 2 zeigt schematisch einen Verlauf 58 eines Ladewerts der Energiespeichervorrichtung 12.

Der dargestellte Verlauf 58 beginnt im Zeitpunkt t₀. Die Energiespeichervorrichtung 12 weist zum Zeitpunkt t₀ einen Ladewert von 0% auf. Die Energiespeichervorrichtung 12 wird nun geladen, beispielsweise mit der in Figur 1 schematisch dargestellten Ladevorrichtung 70. Dabei greift das erste Kopplungselement 26 kraft- und/oder formschlüssig in die korrespondierend ausgebildete Ladeausnehmung 72 ein, um so eine mechanische und elektrische Verbindung zwischen der Energiespeichervorrichtung 12 und der Ladevorrichtung 70 herzustellen. In einer Ladestellung stehen die Anschlusskontakte 34 mit elektrischen Ladekontakten 74 der Ladevorrichtung 70 elektrisch leitend in Kontakt.

Zum Zeitpunkt t₁ ist ein Maximal-Ladewert von 100% erreicht.

Die Energiespeichervorrichtung 12 kann nun aus der Ladevorrichtung 70 entnommen werden. Der Maximal-Ladewert bleibt erhalten bis zum Zeitpunkt t₂.

Zum Zeitpunkt t₂ wird beispielsweise das mit der Energiespeichervorrichtung 12 zwischenzeitlich gekoppelte Elektrogerät 10 aktiviert, so dass die Energiespeicher 36 bestimmungsgemäß entladen werden bis zum Zeitpunkt t₃. Der Ladewert liegt nun unterhalb von 50%.

Vom Zeitpunkt t₃ bis zum Zeitpunkt t₄ wird der Energiespeichervorrichtung 12 keine Energie entnommen.

Ab dem Zeitpunkt t₄ wird bis zum Zeitpunkt t₅ wieder elektrische Energie durch das Elektrogerät 10 der Energiespeichervorrichtung 12 entnommen.

Beginnend im Zeitpunkt t₅ und endend im Zeitpunkt t₆ wird der Energiespeichervorrichtung 12 keine Energie entnommen.

Eine weitere Energieentnahme aus der Energiespeichervorrichtung beginnt im Zeitpunkt t₆ und endet im Zeitpunkt t₇.

Ab dem Zeitpunkt t₇ wird der Energiespeichervorrichtung 12 wiederum keine Energie entnommen.

Im Zeitpunkt t₈ beginnt wieder eine Ladevorgang, der im Zeitpunkt t₉ endet, wenn die Energiespeicher 36 wieder maximal, also zu 100% aufgeladen sind.

Wird die Energiespeichervorrichtung 12 für eine Zeitdauer, die der Ladezustandserhaltungszeit t_{L} entspricht nicht genutzt, beispielsweise ab der letzten bestimmungsgemäßen Entnahme von elektrischer Energie im Zeitpunkt t₆ oder nach Beendigung der letzten Entnahme elektrischer Energie im Zeitpunkt t₇ oder im Zeitpunkt t₀ oder t₈ beim Ladebeginn oder im Zeitpunkt t₁ oder t₉ beim Ladeende oder beim Erreichen des Lagerzustands-Ladewerts, wird durch die Vergleichseinrichtung 50 der Zeitpunkt t₁₀ bestimmt, in dem die mit der Zeitmesseinrichtung 48 gemessene Betätigungszeit t_{B} der Ladezustandserhaltungszeit t_{L} entspricht.

Die Steuereinrichtung 40 aktiviert nun im Zeitpunkt t₁₀ die Entladeeinrichtung 42. Die Entladeeinrichtung 42 entlädt nun die Energiespeicher 36 durch Abgabe elektrischer Energie am Verbraucher 44 oder an mehreren Verbrauchern 44 der Energiespeichervorrichtung 12.

Dieser Entladevorgang dauert bis zum Zeitpunkt t₁₁, im dem der vorgegebene Lagerzustand-Ladewert erreicht wird. Dieser kann einen Wert in einem Bereich von etwa 50% bis etwa 70% des Maximal-Ladewerts aufweisen.

Die Energiespeichervorrichtung 12 befindet sich nun in einem Lagerzustand und kann in diesem dauerhaft gelagert werden mit einem verringerten Risiko einer chemischen Zersetzung der Energiespeicher 36.

Das automatische Entladen der Energiespeichervorrichtung 12 setzt insbesondere keine Kopplung der Energiespeichervorrichtung 12 mit dem Elektrogerät 10 oder einer Ladevorrichtung voraus. Das Entladen der Energiespeichervorrichtung 12, insbesondere von deren Energiespeichern 36, erfolgt über die internen Verbraucher 44. Die über diese entnommene Energie wird beispielsweise in Wärme umgesetzt.

Dadurch, dass sich die Energiespeichervorrichtung 12 nach der vorgegebenen Ladezustandserhaltungszeit t_{L} automatisch auf den Lagerzustands-Ladewert entlädt, muss ein Nutzer der Energiespeichervorrichtung 12 den Entladevorgang nicht manuell starten und kann somit auch ein empfohlenes Entladen der Energiespeicher 36 nicht vergessen.

### Bezugszeichenliste

- 10: Elektrogerät
- 12: elektrische Energiespeichervorrichtung
- 14: Verbraucher
- 16: Elektromotor
- 18: Steuereinrichtung
- 20: Betätigungseinrichtung
- 22: Anschlusskontakt
- 24: Kopplungseinrichtung
- 26: erstes Kopplungselement
- 28: zweites Kopplungselement
- 30: Kopplungsvorsprung
- 32: Kopplungsausnehmung
- 34: Anschlusskontakt
- 36: Energiespeicher
- 38: Batterie
- 40: Steuereinrichtung
- 42: Entladeeinrichtung
- 44: Verbraucher
- 46: Widerstand
- 48: Zeitmesseinrichtung
- 50: Vergleichseinrichtung
- 52: Speichereinrichtung
- 54: Aktivierungseinrichtung
- 56: Lade-/Entladestrommesseinrichtung
- 58: Verlauf
- 60: Gehäuse
- 70: Ladevorrichtung
- 72: Ladeausnehmung
- 74: Ladekontakt
- 100: elektrisches Energiespeichervorrichtungssystem

## Patentansprüche

1. Elektrisches Energiespeichervorrichtungssystem (100) umfassend eine elektrische Energiespeichervorrichtung (12) für ein Elektrogerät (10), welche elektrische Energiespeichervorrichtung (12) mindestens einen elektrischen Energiespeicher (36) und eine Steuereinrichtung (40) zum Steuern und Überwachen eines Ladezustands des mindestens einen elektrischen Energiespeichers (36) umfasst, welche Steuereinrichtung (40) ausgebildet ist zum Aktivieren einer Entladeeinrichtung (42) zum Entladen des mindestens einen Energiespeichers (36) durch Abgabe von im mindestens einen elektrischen Energiespeicher (36) gespeicherter Energie an mindestens einen elektrischen Verbraucher (44) der elektrischen Energiespeichervorrichtung (12), **dadurch gekennzeichnet, dass** die Steuereinrichtung (40) ausgebildet ist zum automatischen Aktivieren der Entladeeinrichtung (42) nach einer vorgegebenen Ladezustandserhaltungszeit.

2. Elektrisches Energiespeichervorrichtungssystem nach Anspruch 1, **gekennzeichnet durch** eine Zeitmesseinrichtung (48) und durch eine Vergleichseinrichtung (50), welche Zeitmesseinrichtung (48) ausgebildet ist zum Messen einer Betätigungszeit ab oder nach einer bestimmungsgemäßen Entnahme von elektrischer Energie aus der Energiespeichervorrichtung (12) durch ein Elektrogerät (10) oder ab oder nach einem bestimmungsgemäßen Laden der Energiespeichervorrichtung (12) und welche Vergleichseinrichtung (50) ausgebildet ist zum Vergleichen der Betätigungszeit und der vorgegebenen Ladezustandserhaltungszeit,
wobei insbesondere die Steuereinrichtung (40) ausgebildet ist zum Aktivieren der Entladeeinrichtung (42), wenn die Betätigungszeit mindestens der Ladezustandserhaltungszeit entspricht.

3. Elektrisches Energiespeichervorrichtungssystem nach Anspruch 2, **dadurch gekennzeichnet, dass** die Zeitmesseinrichtung (48) ausgebildet ist zum Zurücksetzen der Betätigungszeit auf einen Startwert mit Beginn oder Beendigung einer bestimmungsgemäßen Entnahme von elektrischer Energie aus der Energiespeichervorrichtung (12) durch ein Elektrogerät (10) oder ab oder nach einem bestimmungsgemäßen Laden der Energiespeichervorrichtung (12),
wobei insbesondere der Startwert Null ist.

4. Elektrisches Energiespeichervorrichtungssystem nach einem der Ansprüche 2 oder 3, **dadurch gekennzeichnet, dass**
a) die Steuereinrichtung (40) die Zeitmesseinrichtung (48) und/oder die Vergleichseinrichtung (50) umfasst
und/oder
b) die Ladezustandserhaltungszeit einen Wert in einem Bereich von etwa 7 bis 21 Tagen, insbesondere in einem Bereich von 12 bis 16 Tagen, aufweist.

5. Elektrisches Energiespeichervorrichtungssystem nach einem der voranstehenden Ansprüche, **gekennzeichnet durch** eine Speichereinrichtung (52) zum Speichern der Ladezustandserhaltungszeit,
wobei insbesondere die Steuereinrichtung (40) die Speichereinrichtung (52) umfasst.

6. Elektrisches Energiespeichervorrichtungssystem nach einem der Ansprüche 2 bis 5, **gekennzeichnet durch** eine Aktivierungseinrichtung (54) zum Aktivieren der Zeitmesseinrichtung (48),
wobei insbesondere die Aktivierungseinrichtung (54)
a) eine Lade-/Entladestrommesseinrichtung (56) umfasst zum Messen eines Ladestroms beim bestimmungsgemäßen Laden der Energiespeichervorrichtung (12) und/oder zum Messen eines Entladestroms bei der bestimmungsgemäßen Entnahme von elektrischer Energie aus der Energiespeichervorrichtung (12) durch ein Elektrogerät (10)
und/oder
b) ausgebildet ist zum Aktivieren der Zeitmesseinrichtung (48) in Abhängigkeit eines Entladestromgradients, welcher einen von Null verschiedenen Wert aufweist.

7. Elektrisches Energiespeichervorrichtungssystem nach einem der voranstehenden Ansprüche, **dadurch gekennzeichnet, dass** die Entladeeinrichtung (42) ausgebildet ist zum Entladen des mindestens einen elektrischen Energiespeichers (36) von einem Ist-Ladewert auf einen vorgegebenen Lagerzustands-Ladewert
wobei insbesondere
a) die Entladeeinrichtung (42) ausschließlich aktivierbar ist, wenn der Ist-Ladewert größer als der Lagerzustands-Ladewert ist,
und/oder
b) der Lagerzustands-Ladewert einen Wert in einem Bereich von etwa 50% bis etwa 70% eines Maximal-Ladewerts, welcher einer maximalen Ladung des mindestens einen Energiespeichers (36) entspricht, aufweist.

8. Elektrisches Energiespeichervorrichtungssystem nach einem der voranstehenden Ansprüche, **dadurch gekennzeichnet, dass**
a) die Steuereinrichtung (40) die Entladeeinrichtung (42) umfasst und/oder
b) der mindestens eine elektrische Verbraucher (44) in Form eines Widerstands (46) ausgebildet ist
und/oder
c) die Steuereinrichtung (40) den mindestens einen elektrischen Verbraucher (46) umfasst.

9. Elektrisches Energiespeichervorrichtungssystem nach einem der voranstehenden Ansprüche, **dadurch gekennzeichnet, dass**
a) der mindestens eine elektrische Energiespeicher (36) in Form einer wiederaufladbaren Batterie (38) ausgebildet ist
und/oder
b) das elektrische Energiespeichervorrichtungssystem eine Mehrzahl von elektrischen Energiespeichern (36) umfasst
und/oder
c) das elektrische Energiespeichervorrichtungssystem eine elektrische Ladevorrichtung (70) zum Laden des mindestens einen Energiespeichers (36) der elektrischen Energiespeichervorrichtung (12) umfasst.

10. Elektrisches Energiespeichervorrichtungssystem nach einem der voranstehenden Ansprüche, **gekennzeichnet durch** mindestens ein Elektrogerät (10) mit mindestens einem elektrischen Verbraucher (14),
wobei insbesondere das elektrische Energiespeichervorrichtungssystem eine Kopplungseinrichtung (24) umfasst zum kraft- und/oder formschlüssigen Koppeln des mindestens einen Elektrogeräts (10) und der elektrischen Energiespeichervorrichtung (12) in einer Kopplungsstellung, in welcher das mindestens eine Elektrogerät (10) und die elektrische Energiespeichervorrichtung (12) mechanisch und elektrisch miteinander gekoppelt sind,
wobei weiter insbesondere die Kopplungseinrichtung (24) mindestens ein erstes Kopplungselement (26) und mindestens ein zweites Kopplungselement (28) umfasst, dass das mindestens eine erste Kopplungselement (26) an der elektrischen Energiespeichervorrichtung (12) angeordnet oder ausgebildet ist, dass das mindestens eine zweite Kopplungselement (28) am mindestens einen Elektrogerät (10) angeordnet oder ausgebildet und dass das mindestens eine erste und das mindestens eine zweite Kopplungselement (26, 28) in der Kopplungsstellung kraft- und/oder formschlüssigen in Eingriff stehen
wobei weiter insbesondere das mindestens eine erste und das mindestens eine zweite Kopplungselement (26, 28) in einer Trennstellung, in welcher das mindestens eine Elektrogerät (10) und die elektrische Energiespeichervorrichtung (12) vollständig voneinander getrennt sind, außer Eingriff stehen.

11. Verfahren zum mindestens teilweisen aktiven Entladen mindestens eines Energiespeichers (36) einer elektrischen Energiespeichervorrichtung (12), **dadurch gekennzeichnet, dass** der mindestens eine Energiespeicher (36) nach einer vorgegebenen Ladezustandserhaltungszeit automatisch mindestens teilweise entladen wird.

12. Verfahren nach Anspruch 11, **dadurch gekennzeichnet, dass** eine Betätigungszeit ab oder nach einer bestimmungsgemäßen Entnahme von elektrischer Energie aus der Energiespeichervorrichtung (12) durch ein Elektrogerät (10) oder ab oder nach einem bestimmungsgemäßen Laden der Energiespeichervorrichtung (12) gemessen und mit der vorgegebenen Ladezustandserhaltungszeit verglichen wird und dass der mindestens eine Energiespeicher (36) automatisch mindestens teilweise entladen wird, wenn die Betätigungszeit mindestens der Ladezustandserhaltungszeit entspricht,
wobei insbesondere die Betätigungszeit mit Beginn oder Beendigung einer bestimmungsgemäßen Entnahme von elektrischer Energie aus der Energiespeichervorrichtung (12) durch ein Elektrogerät (10) oder ab oder nach einem bestimmungsgemäßen Laden der Energiespeichervorrichtung (12) auf einen Startwert zurückgesetzt wird,
wobei weiter insbesondere
a) der Startwert auf Null gesetzt wird
und/oder
b) die Betätigungszeit auf den Startwert zurückgesetzt wird, wenn ein Entladestromgradient eines Entladestroms bei der bestimmungsgemäßen Entnahme von elektrischer Energie aus der Energiespeichervorrichtung (12) durch ein Elektrogerät (10) einen von Null verschiedenen Wert aufweist.

13. Verfahren nach Anspruch 11 oder 12, **dadurch gekennzeichnet, dass** der mindestens eine Energiespeicher (36) automatisch von einem Ist-Ladewert auf einen vorgegebenen Lagerzustands-Ladewert teilweise entladen wird.

14. Verfahren nach Anspruch 13, **dadurch gekennzeichnet, dass**
a) der mindestens eine Energiespeicher (36) nur dann automatisch mindestens teilweise entladen wird, wenn der Ist-Ladewert größer als der Lagerzustands-Ladewert ist,
und/oder
b) als Lagerzustands-Ladewert ein Wert in einem Bereich von etwa 50% bis etwa 70% eines Maximal-Ladewerts, welcher einer maximalen Ladung des mindestens einen Energiespeichers (36) entspricht, vorgegeben wird.

15. Verfahren nach einem der Ansprüche 11 bis 14, **dadurch gekennzeichnet, dass** der mindestens eine Energiespeicher (36) automatisch durch Abgabe von im mindestens einen elektrischen Energiespeicher (36) gespeicherter Energie an mindestens einen elektrischen Verbraucher (44) der elektrischen Energiespeichervorrichtung (12) mindestens teilweise entladen wird.
